# EUROPEAN PATENT APPLICATION

(11) **EP 1 054 218 A1**
(43) Date of publication of application: **22.11.2000**
(21) Application number: 99108672.9
(22) Date of filing: 17.05.1999
(51) Int. Cl.: F24D 19/10, F04D 15/00, H02P 7/00

(54) **Two-way pump for gas boiler, control circuit thereof, and control method thereof**

(71) Applicant: DAEWOO ELECTRONICS CO., LTD, Seoul (KR)
(72) Inventor: Yong-Bum Kim,, Yonsu-Ku, Incheon (KR)
(74) Representative: Altenburg, Udo, Dipl.-Phys.

(57) **Abstract**

A two-way pump control circuit capable of reducing impact noise generated by a two-way pump while changing a mode of a gas boiler is provided. In the circuit, first and second switches switch an alternating current power which is selectively applied to a two-way pump motor as a two-way pump driving voltage according to an operation state of the gas boiler. A driver for selectively drives the first and second switches according to the operation state of the gas boiler. A zero crossing signal generator detects a zero point from the alternating current power during a constant cycle to generate predetermined width of pulse signal. A controller generates first and second control signals to control the first and second switches according to the operation state of the gas boiler in response to the pulse signal from the zero crossing signal generator, respectively, and controls a duty cycle of the first and second control signals during a mode change of the gas boiler in order to control a phase of the two-way pump driving voltage.

## Description

### BACKGROUND OF THE INVENTION

### 1. Field of the Invention

The present invention relates to a gas boiler, more particularly, to a two-way pump for a gas boiler which circulates heated hot-water to thereby switch from a hot water mode to a heating mode or from the heating mode to the hot water mode, and control circuit and method thereof.

### 2. Prior Art

A two-way pump of a gas boiler serves to circulate hot-water heated by a heat exchanger to thereby switch from a hot water mode to a heating mode or from the heating mode to the hot water mode.

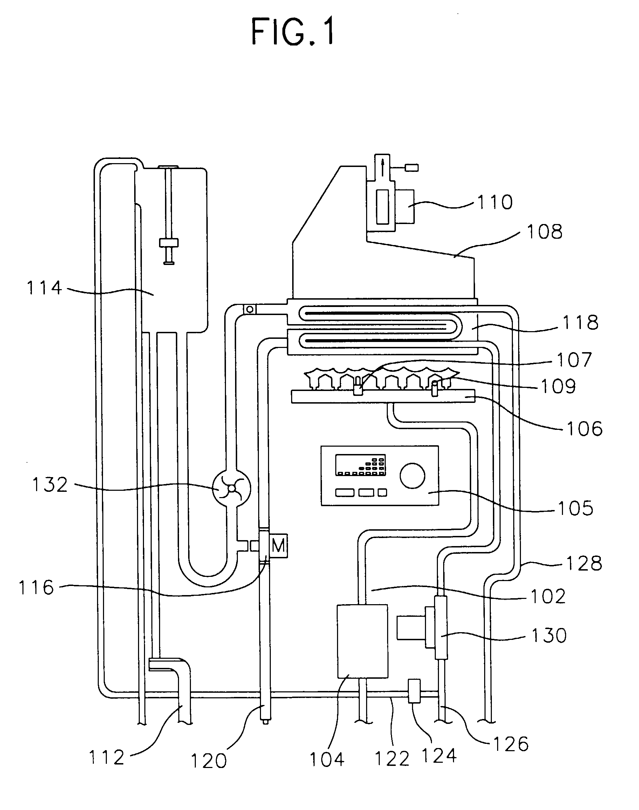

FIG. 1 shows a configuration of a conventional gas boiler. As shown in FIG. 1, the conventional gas boiler includes a gas valve 104, a controller 105, a burner 106, a spark plug 107, a water tank 114, a cross valve 116, a heat exchanger 118, a hot-water feeding tube 120, a flow valve 130, and a cycle pump 132.

When gas is fed into a burner 106 by switching the gas valve 104, a spark generated by the spark plug 107 lights the gas. Then, a flame is generated at the burner 106. At this time, the infrared sensor 109 detects the temperature of the flame and outputs combustion temperature corresponding to the temperature of the flame to the controller 105. That is, information of combustion is outputted to the controller 105.

A combustion gas of high temperature rises. The heat exchanger 118 is installed at an upper part of the burner 106 through which the combustion gas flows to heat the warm water and cold water. The warm water circulates in the heat exchanger 111. The cold water, which goes through the cold water feeding tube 126, is heated in the heat exchanger 118. As a result, both cold water and warm water are heated by the combustion in the burner 106.

The cross valve 116 is controlled to circulate the warm water in a heating mode, and to feed warm water in a hot-water mode. Detection of the hot-water mode is determined by detecting the cold water being fed to the flow valve 130.

At the heating mode, the warm water heated by the heat exchanger 118 is fed to a warm water tube (not shown) through the hot-water feeding tube 120. Then the warm water is returned to the water tank 114 through the warm water return tube 112. The warm water loses heat while the warm water flows through warm water tube (not shown). The returned warm water is again fed to the heat exchanger 118 through the cross valve 116 and the cycle pump 132. The warm water being fed is again heated at the heat exchanger 118 and is outputted through the hot-water feeding tube 126. The cross valve 116 is provided to control water flow. At the heating mode, the flow cycle of the warm water includes the water tank 114 and the heat exchanger 118. Meanwhile, at the water warming mode, the flow cycle of the warm water includes the cycle pump 132 and the heat exchanger 118.

However, in the conventional gas boiler, a pipe connection structure is very complex, the manufacturing cost increases, and there are more pipe connectors so water leakage increases. Further, since an additional cross valve should be used, the manufacturing cost increases.

### SUMMARY OF THE INVENTION

Therefore, it is a first object of the present invention, for the purpose of solving the above mentioned problems, to provide a two-way pump capable of simplifying a pipe connecting structure in a gas boiler.

It is a second object of the present invention, to provide a two-way pump control circuit capable of reducing impact noise generated by a two-way pump while changing a mode of a gas boiler.

It is a third object of the present invention, to provide a two-way pump control method capable of reducing impact noise generated by a two-way pump while changing a mode of a gas boiler.

In order to attain the first object, according to the presnent invention, there is provided a two-way pump for a gas boiler, said pump comprising:
a housing including a heating inlet formed at a first end thereof for introducing heating water from a water tank, and heating and hot-water outlets formed at second and third ends thereof for discharging the heating water introduced through the heating water inlet toward a heating pipe and a heat exchanger, respectively;
a ball movably mounted between the heating and hot-water outlets within the housing for opening/closing the heating and hot-water outlets;
an impeller rotatably mounted within the housing for selectively moving the heating water introduced through the heating inlet toward the heating pipe and the heat exchanger; and
a water hammer reducing device including a case formed at a heating outlet side of the housing and communicating with the housing, and a diaphragm mounted within the case for reducing a water hammer generated by a pressure of the heating water introduced through the heating inlet.

In order to attain the second object, according to the presnent invention, there is provided a two-way pump control circuit for a gas boiler, said control circuit comprising:
first and second switches for switching an alternating current power which is selectively applied to a two-way pump motor as a two-way pump driving voltage according to an operation state of the gas boiler;
a driver for selectively driving the first and second switches according to the operation state of the gas boiler;
a zero crossing signal generator for detecting a zero point from the alternating current power during a constant cycle to generate predetermined width of pulse signal; and
a controller for generating first and second control signals to control the first and second switches according to the operation state of the gas boiler in response to the pulse signal from the zero crossing signal generator, respectively, and for controlling a duty cycle of the first and second control signals during a mode change of the gas boiler in order to control a phase of the two-way pump driving voltage.

In order to attain the third object, according to the presnent invention, there is provided a two-way pump control method for a gas boiler, said method comprising the steps of;
(a) judging whether a stop mode, a heating mode, or a hot-water mode of the gas boiler is selected;
(b) judging whether a two-way pump of the gas boiler is driving; and
(c) stopping or driving the two-way pump in such a manner that a speed of the two-way pump is controlled for a predetermined time according to a mode of the gas boiler selected in step (a) when the two-way pump of the gas boiler drives.

The two-way pump of a gas boiler according to the present invention can simplify a pipe connecting structure in a gas boiler. According to the two-way pump control circuit and method, when a hot-water mode is switched to a heating mode or the heating mode switched to the hot-water mode, a two-way pump driving voltage, that is, a speed of a two-way pump motor is controlled. Thus, when a ball of the two-way pump moves within a pump housing up and down, it slowly opens and closes an opening/closing hole. Accordingly, a sudden change of a heating water current is prevented so that impact noise is prevented.

Other objects and further features of the present invention will become apparent from the detailed description when read in conjunction with the attached drawings.

### BRIEF DESCRIPTION OF THE DRAWINGS

Other features and advantages of the present invention will become more apparent from the following description taken in connection with the accompanying drawings, wherein:
FIG. 1 is a view for showing a configuration of a conventional gas boiler;
FIG. 2 is a view for schematically showing a gas boiler including a two-way pump according to an embodiment of the present invention;
FIG. 3 is an end view for showing one example of the two-way pump for a gas boiler shown in FIG. 2;
FIG. 4 is a circuitry diagram for showing a two-way pump control circuic according to an embodiment of the present invention;
FIGs. 5A through 5C are a timing diagram for illustrating an operation of the two-way pump control circuit shown in FIG. 4;
FIG. 5D is a view for showing a magnitude of a power which is applied to the two-way pump motor during forward and reverse rotations thereof;
FIG. 6 is a circuitry diagram for showing one example of a zero crossing signal generator shown in FIG. 4;
FIGs. 7A through 7C are a timing diagram for illustrating an operation of the zero crossing signal generator shown in FIG. 6; and
FIG. 8 is a flow chart for illustrating a two-way pump control method according to an embodiment of the present invention.

### DETAILED DESCRIPTION OF THE PREFERRED EMBODIMENT

The preferred embodiment of the present invention will hereinafter be described in detail with reference to the accompanying drawings.

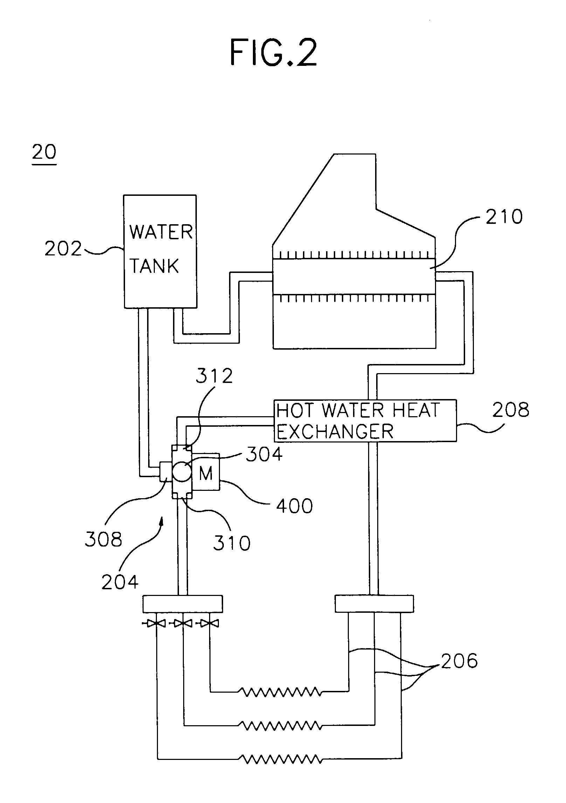

FIG. 2 schematically shows a gas boiler 20 including a two-way pump 20 according to an embodiment of the present invention.

The gas boiler includes a water tank 202, a two-way pump 204, a heating pipe 206, a hot-water heat exchanger 208, and a heating water heat exchanger 210. The water tank 202 temporarily stores heating water heated by the heating water heat exchanger 210. The two-way pump 204 circulates the heating water heated by the heating water heat exchanger 210 to thereby switch to a hot-water mode or a heating mode. The heating water heat exchanger 210 heats the heating water. The two-way pump motor 400 controls an operation of the two-way pump 204.

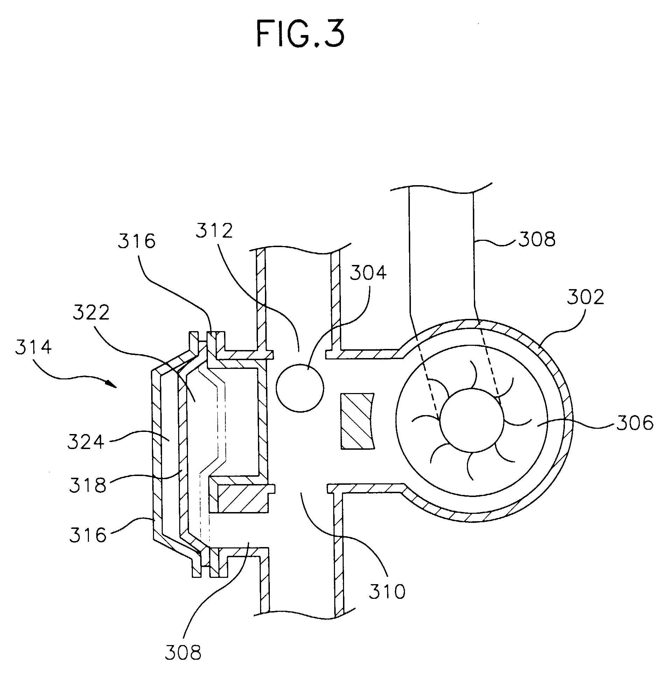

FIG. 3 is an end view for showing one example of the two-way pump 204 for a gas boiler shown in FIG. 2. The two-way pump 204 of the gas boiler includes a housing 302, a ball 304, an impeller 306, and a water hammer reducing device 314. An inlet opening 308 is formed at a first end of the housing 302 for introducing heating water from a water tank 202. A heating outlet 310 is formed at a second end of the housing 302 for discharging the heating water introduced through the inlet opening 308 toward a heating pipe 206. A hot-water outlet 312 is formed at a third end of the housing 302 for discharging the heating water introduced through the inlet opening 308 toward a hot-water heat exchanger 208.

The ball 304 is movably mounted between the heating and hot-water outlets 310 and 312 within the housing 302 and opens/closes the heating and hot-water outlets 310 and 312. The ball 304 can be formed from steel, rubber, plastic, or teflon. When considering low adsorptiveness and durability, teflon is preferably used for the ball 304. The impeller 306 is rotatably mounted within the housing 302 and selectively moves the heating water introduced through the inlet opening 308 toward the heating pipe 206 and the hot-water heat exchanger 208.

The water hammer reducing device 314 reduces a water hammer generated by pressure of the heating water introduced through the inlet opening 308. The water hammer reducing device 314 includes a case 316 and a diaphragm 318. The case 316 is formed at a heating outlet side of the housing 302 and communicates with the housing 302. The diaphragm 318 is mounted within the case 316 and reduces a water hammer generated by a pressure of the heating water introduced through the inlet opening 320. The diaphragm 318 divides a space of the case 316 into a first space 322 and a second space 324.

When a user selects a heating mode, the impeller 306 of the two-way pump 204 forward rotates. In accordance with the forward rotation of the impeller 306, the ball 304 moves from the heating outlet 310 to the hot-water outlet 312 so that the heating water returns to the water tank 202 through water tank 202-inlet opening 308 of two-way pump 204-heating outlet 310 of the two-way pump 204-heating water heat exchanger 208 and repeats this circulation.

On the other hand, when the user selects a hot-water mode, the impeller 306 of the two-way pump 204 reversely rotates. According to the reverse rotation of the impeller 306, the ball 304 moves from the hot-water outlet 312 to the heating outlet 310 so that the heating water returns to the water tank 202 through water tank 202-inlet opening 308 of two-way pump 204-hot-water outlet 312 of the two-way pump 204-hot water heat exchanger 208-heating water heat exchanger 208 and repeats this circulation. During a forward or reverse rotation of the impeller 306 of two-way pump 204, since the heating water introduced through the inlet opening 320 of the case 316 causes pressure to the diaphragm 318, the diaphragm 318 is transformed to a state as shown by a solid line in FIG. 3. Accordingly, the transformation of the diaphragm 318 reduces a water hammer generated by the pressure of the heating water.

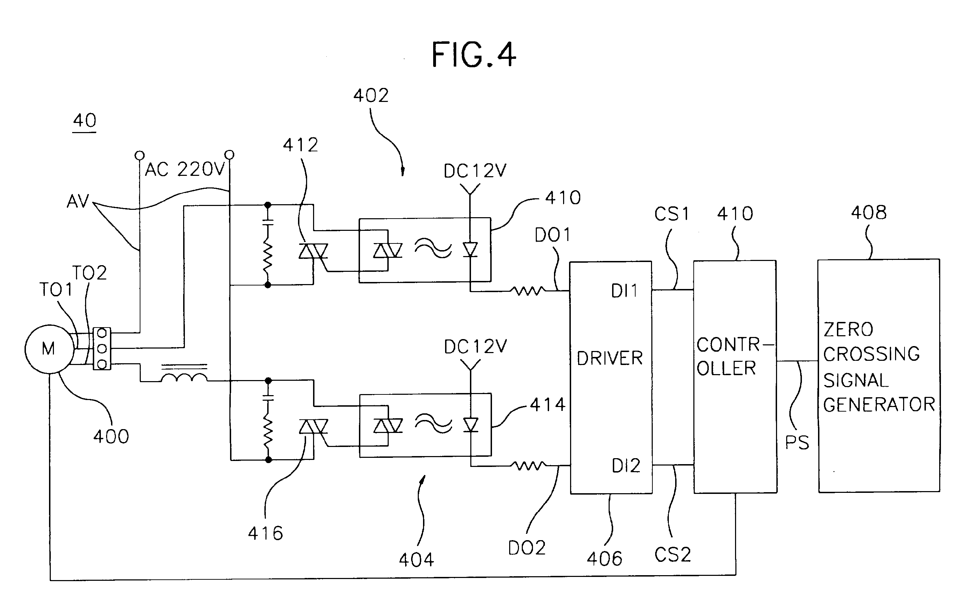

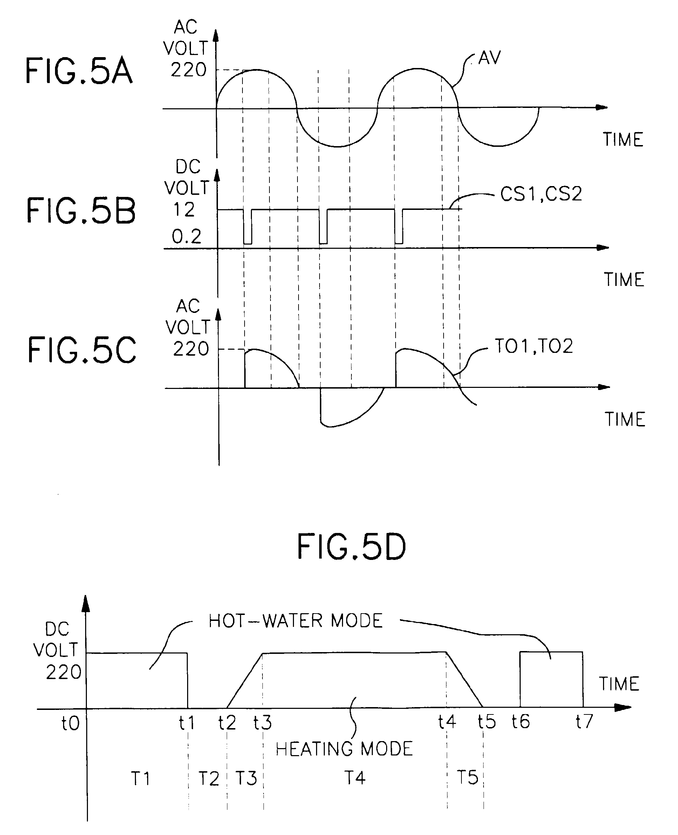

FIG. 4 is a circuitry diagram for showing a two-way pump control circuit 40 according to an embodiment of the present invention. FIGs. 5A through 5C are a timing diagram for illustrating an operation of the two-way pump control circuit 40 shown in FIG. 4.

Referring to FIG. 5A, AV is an alternating current voltage of 220 V which is generated by an alternating current power source and is applied to the two-way pump motor 400. Referring to FIG. 5B, CS1 and CS2 are first and second control signals generated by a controller 410, respectively. Referring to FIG. 5C, TO1 and TO2 are first and second output signal of the two-way pump control circuit 40, respectively.

The two-way pump control circuit 40 includes a first switch 402, a second switch 404, a driver 406, a zero crossing signal generator 408, and a controller 410.

The first and second switches 402 and 404 switch an alternating current power which is selectively applied to a two-way pump motor 400 as a two-way pump driving voltage according to an operation state of the gas boiler 20.

The first switch 402 includes a first photo triac 410 and a first triac 412. The first photo triac 410 is turned on/off according to a first output signal DO1 of the driver 406 and emits light. The first triac 412 is turned on/off according to the light from the first photo triac 410 and switches the alternating current voltage which is selectively applied to the two-way pump motor 400 as the two-way pump driving voltage according to the operation state of the gas boiler 20.

The second switch 404 includes a second photo triac 414 and a second triac 416. The second photo triac 414 is turned on/off according to a second output signal DO2 of the driver 406 and emits light. The second triac 416 is turned on/off according to the light from the second photo triac 414 and switches the alternating current voltage which is selectively applied to the two-way pump motor 400 as the two-way pump driving voltage according to the operation state of the gas boiler 20.

The driver 406 selectively drives the first and second switches 402 and 404 according to the operation state of the gas boiler 20. When a heating mode and a hot-water mode are selected, the driver 406 drives the first and second switches 402 and 404.

The zero crossing signal generator 408 detects a zero point from alternating current power AC 220V during a constant cycle and generates a predetermined width of a pulse signal PS at the zero point.

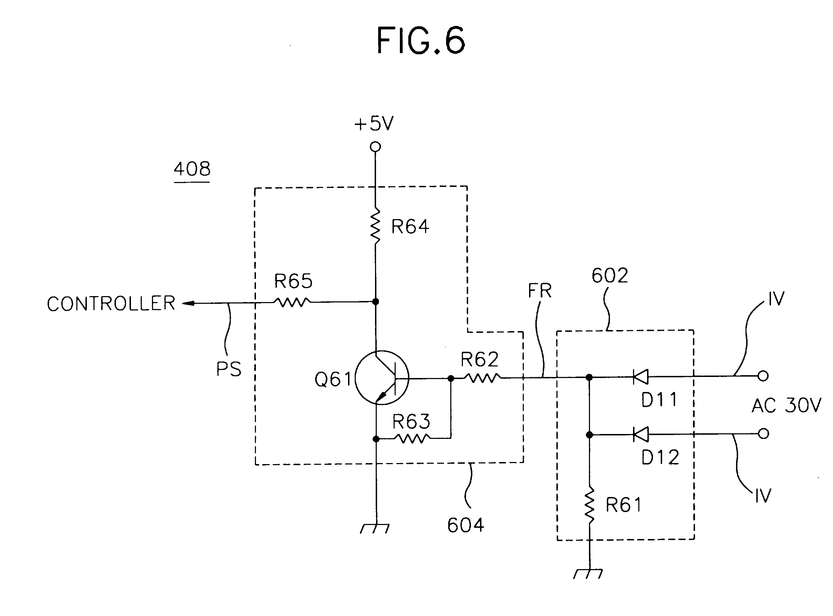

FIG. 6 shows one example of an zero crossing signal generator 408 shown in FIG. 4. The zero crossing signal generator 408 includes a full-wave rectifier 602 and a pulse signal generator 604. The full-wave rectifier 602 full-wave rectifies an alternating current power from the alternating current power source AC 30V and outputs the full-wave rectified alternating current power FR.

The full-wave rectifier 408 includes first and second diodes D11 and D12 connected to an alternating current power source AC 30V to each other in parallel. The full-wave rectifier 408 includes a resistor R61 between an anode of the second diode D12 and a ground.

The pulse signal generator 604 generates the pulse signal PS of a predetermined width at the zero point of the full-wave rectified alternating current power FR from the full-wave rectifier 602.

The pulse signal generator 604 includes an npn transistor Q61 having an emitter connected to a ground, a base connected to an output terminal of the full-wave rectifier 602, and a collector connected to a power source +5V. The npn transistor Q61 includes a base resistor R62 connected between the base thereof and the output terminal of the full-wave rectifier 602 and a resistor R63 coupled between the base and collector thereof. The npn transistor Q61 further includes a collector resistor R64 coupled between the collector thereof and the power source +5V and a resistor R65 coupled between the controller 401 and a junction point of one end of the collector resistor R64 and the collector thereof.

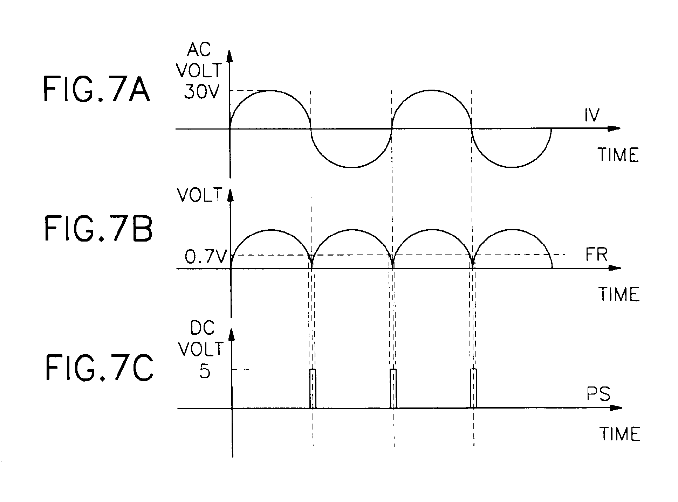

FIGs. 7A through 7C are a timing diagram for illustrating an operation of the zero crossing signal generator 408 shown in FIG. 6. With reference to FIG. 7A, IV represents an input voltage of the full-wave rectifier 602 of the zero crossing signal generator 408. With reference to FIG. 7B, FR represents the full-wave rectified alternating current power from the full-wave rectifier 602. With reference to FIG. 7C, PS represents the pulse signal PS of a predetermined width generated by the pulse signal generator 604.

The controller 410 generates first and second control signals CS1 and CS2 to control the first and second switches 402 and 404 according to the operation state of the gas boiler 20 in response to the pulse signal PS from the zero crossing signal generator 408, respectively. The controller 410 controls a duty cycle of the first and second control signals CS1 and CS2 during a mode change of the gas boiler 20 in order to control a phase of the two-way pump driving voltage.

FIG. 5D is a view for showing a magnitude of the power which is applied to the two-way pump motor 400 during forward and reverse rotations thereof.

A time t0 represents a time that starts a hot-water mode by means of reverse rotation of the two-way pump motor 400. A first time interval T1 from the time t0 to a time t1 represents a time interval that continues a reverse rotation of the two-way pump motor 400 to thereby maintain a hot-water mode. The time t1 represents a time that stops a hot-water mode. A second time interval T2 from the time t1 to a time t2 represents a time interval to remove loss according to load by an inertia force of the two-way pump motor 400 when a hot-water mode is switched to a heating mode. Preferably, in an embodiment of the present invention, the second time interval T2 is 2 seconds. The time t2 represents a time that starts a heating mode by means of forward rotation of the two-way pump motor 400. A third time interval T3 from the time t2 to a time t3 is a time interval that forward rotates the two-way pump 204 slowly in such a manner that a speed of the two-way pump motor 400 is increased as time goes by. A time t4 is the time when the heating mode starts to stop. A fifth time interval T5 from the time t4 to a time t5 is a time interval that reversely rotates the two-way pump 204 slowly in such a manner that a speed of the two-way pump motor 400 is reduced as time goes by.

Hereinafter, an operation of the two-way pump control circuit 40 and the two-way pump control method will be described referring to the accompanying drawings.

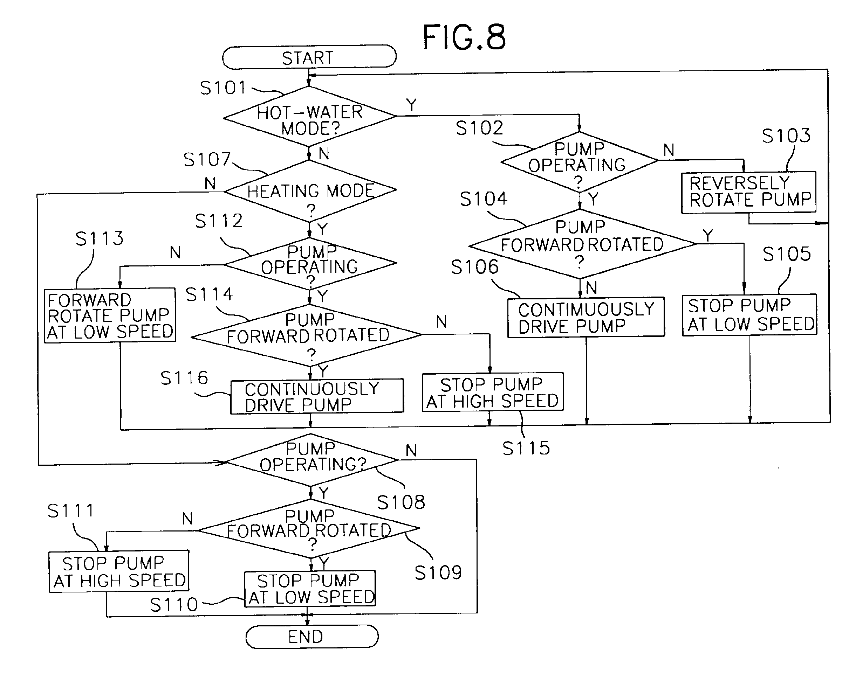

FIG. 8 is a flow chart for illustrating a two-way pump control method according to an embodiment of the present invention.

In step S101, the controller 410 judges whether or not a hot-water mode of the gas boiler 20 is selected.

As a result of the judgement in step S101, when the hot-water mode of the gas boiler 20 is selected, the controller 410 judges whether or not the two-way pump 204 drives(step S102).

As a result of the judgement in step S102, when the two-way pump 204 stops, the controller 410 reversely rotates the two-way pump 204 at a time t0 or a time t6 as shown in FIG. 5D(step S103). At this time, the zero crossing signal generator 408 generates the pulse signal PS of a predetermined width and outputs it to the controller 410. The controller 410 applies a first control signal CS1 of a high level and a second control signal CS2 of a low level to first and second input terminals DI1 and DI2 in response to the pulse signal PS from the zero crossing signal generator 408, respectively. The driver 406 turns off and on the first and second switches 402 and 404 in response to the first control signal CS1 of a high level and the second control signal CS2 of a low level from the controller 410, respectively. Accordingly, AC power of 220 volt is applied to the two-way pump motor 400 for a first time interval T1 as shown in FIG. 5D to thereby reversely rotate the two-way pump 204. Then, the routine returns to step S101. When it is judged that the two-way pump 204 drives in step S102, the controller 410 judges whether or not the two-way pump 204 forward rotates(step S104).

As a result of the judgement in step S104, when the two-way pump 204 forward rotates, the controller 410 stops the two-way pump 204 at low speed in such a manner that a speed of the two-way pump motor 400 is gradually reduced for the fifth time interval T5, that is, 5 seconds as time goes by and moves the ball 304 of the two-pump 204 from the hot-water outlet 312 to the heating outlet 310 within the housing 302(step S105). At this time, the controller 410 in response to the pulse signal PS from the zero crossing signal generator 408 applies a first control signal CS1, a duty cycle of which is controlled by the first input terminal DI1 of the driver 406 for the fifth time interval T5 from the time t4 to the time t5. The first control signal CS1 is applied to the first input terminal DI1 of the driver 406 in such a manner that the duty cycle thereof is gradually reduced as time goes by from the time t4 to the time t5. At the same time, the controller 410 applies the second control signal CS2 of a high level for the fifth time interval T5. Accordingly, the driver 406 turns on the first switch 402 for 5 seconds so that AC power the magnitude of which is controlled from AC source (AC 220) as shown in FIG. 7C is applied to the two-way pump motor 400. Accordingly, the two-way pump motor 400 slowly stops in such a manner that the speed of the two-way pump motor 400 is gradually reduced for 5 seconds from the time t4 to the time t5. Thus, when the ball 304 of the two-way pump 204 moves from the hot-water outlet 312 to the heating outlet 310 within the housing 302, an opening/closing hole is slowly closed. Accordingly, a sudden change of a heating water current is prevented so that impact noise is prevented. Then the routine returns to step S101. When it is judged that the two-way pump 204 reversely rotates in step S104, the controller 410 continues the reverse rotation of the two-way pump 204 for a fourth time interval T4 from the time t3 to the time t4 to thereby maintain the hot-water mode(step S106).

On the other hand, as a result of the step S101, when the hot-water mode of the gas boiler 20 is not selected, the controller 410 judges whether or not a heating mode is selected(step S107).

As a result of the judgement in step S107, when the heating mode of the gas boiler is not selected, the controller 410 judges that a stop mode of the gas boiler 20 is selected and judges whether or not the two-way pump 204 drives(step S108).

As a result of the judgement in step S108, when the two-way pump 204 drives, the controller 410 judges whether or not the two-way pump 204 forward rotates(step S109).

As a result of the judgement in step S109, when the two-way pump 204 forward rotates, the controller 410 stops the two-way pump 204 at low speed in such a manner that a speed of the two-way pump motor 400 is gradually reduced for 5 seconds as time goes by via the same method in the step S105. Then the total operation finishes. When it is judged that the two-way pump 204 reversely rotates in step S109, the controller 410 stops the two-way pump 204 at high speed(step S111). Then the total operation finishes.

As a result of the judgement in step S107, when the stop mode of the gas boiler 20 is not selected, the controller 410 judges that a heating mode of the gas boiler 20 is selected and judges whether or not the two-way pump 204 drives(step S112).

As a result of the judgement in step S112, when the two-way pump 204 stops, the controller 410 slowly performs a forward rotation of the two-way pump 204 for 5 seconds and moves the ball 304 from a heating outlet 310 to a hot-water outlet 312 within the housing 302(step S113).

At this time, the controller 410 in response to the pulse signal PD from the zero crossing signal generator 408 applies a first control signal CS1 a duty cycle of which is controlled, by the first input terminal DI1 of the driver 406 for the third time interval T3(5 seconds) from the time t2 to the time t3. The first control signal CS1 is applied to the first input terminal DI1 of the driver 406 in such a manner that the duty cycle thereof is gradually increased as time goes by from the time t2 to the time t3. At the same time, the controller 410 applies the second control signal CS2 of a high level for the fifth time interval T3. Accordingly, the driver 406 turns on the first switch 402 for 5 seconds so that AC power the magnitude of which is controlled from AC source (AC 220) as shown in FIG. 7C is applied to the two-way pump motor 400. Accordingly, the two-way pump motor 400 forward rotates in such a manner that the speed of the two-way pump motor 400 is gradually increased for 5 seconds from the time t2 to the time t2. Thus, when the ball 304 of the two-way pump 204 moves from the heating outlet 310 to the hot-water outlet 312 within the housing 302, an opening/closing hole is slowly closed. Accordingly, a sudden change of a heating water current is prevented so that impact noise is prevented. Then the routine returns to step S101.

When it is judged that the two-way pump 204 reversely rotates in step S104, the controller 410 continues the reverse rotation of the two-way pump 204 for a fourth time interval T4 from the time t3 to the time t4 to thereby maintain the hot-water mode(step S106). Then the routine returns to step S101. On the other hand, referring to FIG. 5D, in order to switch from a hot-water mode to heating mode, when the two-way pump 204 stops at time tl which was reversely rotating in the hot-water mode, it remains in a stop state for the second time interval T2, that is, for 2 seconds, from the time t1 to the time 2 to remove loss according to power load by an inertia force of the two-way pump motor 400.

When it is judged that the two-way pump 204 drives in step S112, the controller 410 judges whether or not the two-way pump 204 forward rotates (step S114).

As a result of the judgement in step S114, when the two-way pump 204 reversely rotates, the controller 410 stops the two-way pump 204 at high speed(step S115). When it is judged that the two-way pump 204 forward rotates, the controller 410 continues the forward rotation of the two-way pump 204 for the fourth time interval T4 from the time t3 to the time t4 to thereby maintain a heating mode.

The two-way pump of a gas boiler according to the present invention can simplify a pipe connecting structure in a gas boiler. According to the two-way pump control circuit and method, when a hot-water mode is switched to a heating mode or the heating mode switched to the hot-water mode, a two-way pump driving voltage, that is, a speed of a two-way pump motor is controlled. Thus, when a ball of the two-way pump moves within a pump housing up and down, it slowly opens and closes an opening/closing hole. Accordingly, a sudden change of a heating water current is prevented so that impact noise is prevented.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A two-way pump for a gas boiler, said pump comprising:
a housing including a heating inlet formed at a first end thereof for introducing heating water from a water tank, and heating and hot-water outlets formed at second and third ends thereof for discharging the heating water introduced through the heating water inlet toward a heating pipe and a heat exchanger, respectively;
a ball movably mounted between the heating and hot-water outlets within the housing for opening/closing the heating and hot-water outlets;
an impeller rotatably mounted within the housing for selectively moving the heating water introduced through the heating inlet toward the heating pipe and the heat exchanger; and
a water hammer reducing device including a case formed at a heating outlet side of the housing and communicating with the housing, and a diaphragm mounted within the case for reducing a water hammer generated by a pressure of the heating water introduced through the heating inlet.

2. A two-way pump control circuit for a gas boiler, said control circuit comprising:
first and second switches for switching an alternating current power which is selectively applied to a two-way pump motor as a two-way pump driving voltage according to an operation state of the gas boiler;
a driver for selectively driving the first and second switches according to the operation state of the gas boiler;
a zero crossing signal generator for detecting a zero point from the alternating current power during a constant cycle to generate predetermined width of pulse signal; and
a controller for generating first and second control signals to control the first and second switches according to the operation state of the gas boiler in response to the pulse signal from the zero crossing signal generator, respectively, and for controlling a duty cycle of the first and second control signals during a mode change of the gas boiler in order to control a phase of the two-way pump driving voltage.

3. The control circuit as defined in claim 2, wherein the first and second switches each includes a photo triac turned on/off according to an output signal of the driver for emitting light; and
a triac turned on/off according to the light from the photo triac for switching the alternating current power which is selectively applied to the two-way pump motor as the two-way pump driving voltage according to the operation state of the gas boiler.

4. The control circuit as defined in claim 2, wherein the zero crossing signal generator includes a full-wave rectifier connected to an alternating current power source for full-wave rectifying an alternating current power from the alternating current power source; and
a pulse signal generator for generating the pulse signal of a predetermined width at the zero point of the full-wave rectified alternating current power from the full-wave rectifier.

5. A two-way pump control method for a gas boiler, said method comprising the steps of;
(a) judging whether a stop mode, a heating mode, or a hot-water mode of the gas boiler is selected;
(b) judging whether a two-way pump of the gas boiler is driving; and
(c) stopping or driving the two-way pump in such a manner that a speed of the two-way pump is controlled for a predetermined time according to a mode of the gas boiler selected in step (a) when the two-way pump of the gas boiler drives.

6. The method as defined in claim 5, when the stop mode of the gas boiler is selected in step (a), step (c) includes judging whether the two-way pump forward or reversely rotates, and stopping the two-way pump in such a manner that the speed thereof is reduced as time goes by for a predetermined time when the two-way pump forward rotates, and stopping the two-way pump at high speed when the two-way pump reversely rotates;
when the heating mode of the gas boiler is selected in step (a), step (c) includes judging whether the two-way pump forward or reversely rotates, continuing the forward rotation of the two-way pump when the two-way pump forward rotates, and stopping the two-way pump at high speed when the two-way pump reversely rotates; and
when the hot-water mode of the gas boiler is selected in step (a), step (c) includes judging whether the two-way pump forward or reversely rotates, and stopping the two-way pump in such a manner that the speed thereof is reduced as time goes by for a predetermined time when the two-way pump forward rotates, and continuing the reverse rotation of the two-way pump when the two-way pump reversely rotates.
